# EUROPÄISCHE PATENTSCHRIFT

(11) **EP 2 218 949 B1**
(45) Veröffentlichungstag und Bekanntmachung des Hinweises auf die Patenterteilung: **07.03.2012**
(21) Anmeldenummer: 09160306.8
(22) Anmeldetag: 14.05.2009
(51) Int. Cl.: F16K 31/06

(54) **Ventileinrichtung**
Valve device
Dispositif d'aération

(30) Priorität: 11.02.2009 DE 202009001691 U
(43) Veröffentlichungstag der Anmeldung: 18.08.2010
(73) Patentinhaber: petra-electric GmbH, 89331 Burgau (DE)
(72) Erfinder: Gierth, Rolf, 89331 Burgau (DE); Höhne, Joachim, 89331 Burgau (DE)
(74) Vertreter: BRP Renaud & Partner

(56) Entgegenhaltungen:
- EP-A2- 0 337 180
- WO-A1-2006/105059
- DE-A1- 2 628 179
- US-A- 4 102 526

## Beschreibung

Die vorliegende Erfindung betrifft eine Ventileinrichtung, insbesondere ein 4/3-Wegeventil mit zwei unabhängig voneinander schaltbaren Magnetventilen.

Dokument DE 2 628 179 offenbart eine Ventileinrichtung, insbesondere ein 4/3 Wegeventil nach dem Oberbegriff des Anspruchs 1.

Um die Funktion von sogenannten 4/3-Wegeventile zu gewährleisten, werden üblicherweise zwei 3/2-Wegeventile in Reihe oder drei 2/2-Wegeventile in Serie geschaltet. Hierfür sind in der Regel aufwändige Abdichtungsmaßnahmen bzw. zusätzliche Schlauchverbindungen und Verschraubungen erforderlich, welche einen erheblichen Mehraufwand erfordern und die Fertigungskosten signifikant erhöhen.

Die vorliegende Erfindung beschäftigt sich mit dem Problem, für eine Ventileinrichtung eine verbesserte Ausführungsform anzugeben, welche insbesondere kompakt baut und zudem konstruktiv einfach aufgebaut ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine als 4/3-Wegeventil ausgebildete Ventileinrichtung, das heißt eine Ventileinrichtung mit vier Anschlüssen und drei Schaltstellungen, mit zwei unabhängig voneinander schaltbaren Magnetventilen zur realisieren, die über ein dazwischen angeordnetes, festes Gehäuse, insbesondere ein Kunststoffgehäuse, mit einer darin angeordneten Kanalstruktur miteinander verbunden sind. Die Ventileinrichtung weist dabei im Bereich des ersten Magnetventils einen ersten Auslasskanal, im Bereich des zweiten Magnetventils einen zweiten Auslasskanal und im Bereich des Gehäuses einen Einlasskanal sowie einen dritten Auslasskanal auf, wobei die im Gehäuse ausgebildete Kanalstruktur derart ausgebildet ist, dass in Abhängigkeit eines Schaltzustandes der beiden Magnetventile der Einlasskanal mit einem der Auslasskanäle kommunizierend verbunden ist. Über das erfindungsgemäß ausgebildete und zwischen den beiden Magnetventilen angeordnete Gehäuse, kann ein 4/3-Wegeventil realisiert werden, welches einerseits kompakt baut und andererseits konstruktiv äußerst einfach aufgebaut ist, wobei insbesondere aufwändig herzustellende Verbindungen, wie beispielsweise Schlauchverbindungen, die darüber hinaus fehler-/störanfällig sind, vermieden werden können. Durch die Tatsache, dass das Gehäuse zudem als kostengünstiges Kunststoffspritzgussteil ausgebildet werden kann, lässt sich die erfindungsgemäße Ventileinrichtung zudem kostengünstig herstellen.

Bei der erfindungsgemäßen Lösung, weist eine Führungshülse des jeweiligen Magnetventils, innerhalb welcher ein Ventilkolben des jeweiligen Magnetventils geführt ist, im Bereich des Gehäuses eine unrunde Außenkontur auf, die formschlüssig und drehfest in eine komplementär dazu ausgebildete Ausnehmung am Gehäuse eingreift. Hierdurch lässt sich das jeweilige Magnetventil auf konstruktiv einfachste Weise drehfest mit dem Gehäuse verbinden, wobei die Führungshülse zusätzlich im Bereich der unrunden Außenkontur eine nach außen offene Nut aufweist, die mit entsprechenden Öffnungen im Gehäuse fluchtet, so dass durch einen durch die Öffnung im Gehäuse eingeführten und in die Nut an der Führungshülse eingreifenden Sicherungsstift eine Fixierung des jeweiligen Magnetventils im Gehäuse gegeben ist. Bei einer derartigen Ausführungsform kann durch das komplementäre Eingreifen der Führungshülse in die entsprechend ausgebildete Ausnehmung im Gehäuse und das Einstecken eines jeweiligen Sicherungsstift in die Führungshülse und dadurch das jeweilige Magnetventil sowohl drehfest als auch in Axialrichtung fest mit dem Gehäuse fixiert werden, wobei durch die jeweiligen Sicherungsstifte eine Fixierung bzw. ein Lösen der Fixierung einfach möglich ist. Zum Fixieren eines Magnetventils im Gehäuse muss dieses lediglich mit seiner Führungshülse in die entsprechende Ausnehmung im Gehäuse eingesteckt und anschließend der zumindest eine zugehörige Sicherungsstift durch die Öffnung im Gehäuse und in die Nut an der Führungshülse eingeschoben werden. Weitere Handgriffe sind nicht erforderlich. Für eine Demontage des Magnetventils vom Gehäuse, insbesondere zu Wartungs- oder Austauschzwecken, muss lediglich der Sicherungsstift gezogen und anschließend das jeweilige Magnetventil aus der Ausnehmung herausgezogen werden.

Bei einer weiteren vorteilhaften Ausführungsform der erfindungsgemäßen Lösung, sind die beiden Magnetventile identisch, das heißt als Gleichteile, ausgebildet. Durch die Verwendung von Gleichteilen können insbesondere ein Lager- und Logistikaufwand verringert und dadurch die Kosten für die Fertigung der erfindungsgemäßen Ventileinrichtung gesenkt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Ventileinrichtung,
- Fig. 2: eine Ansicht auf eine erfindungsgemäße Ventileinrichtung,
- Fig. 3: eine Darstellung wie in Fig. 2, jedoch von einer anderen Perspektive,
- Fig. 4: eine Darstellung wie in Fig. 3, jedoch bei teilweise entferntem ersten Magnetventil.

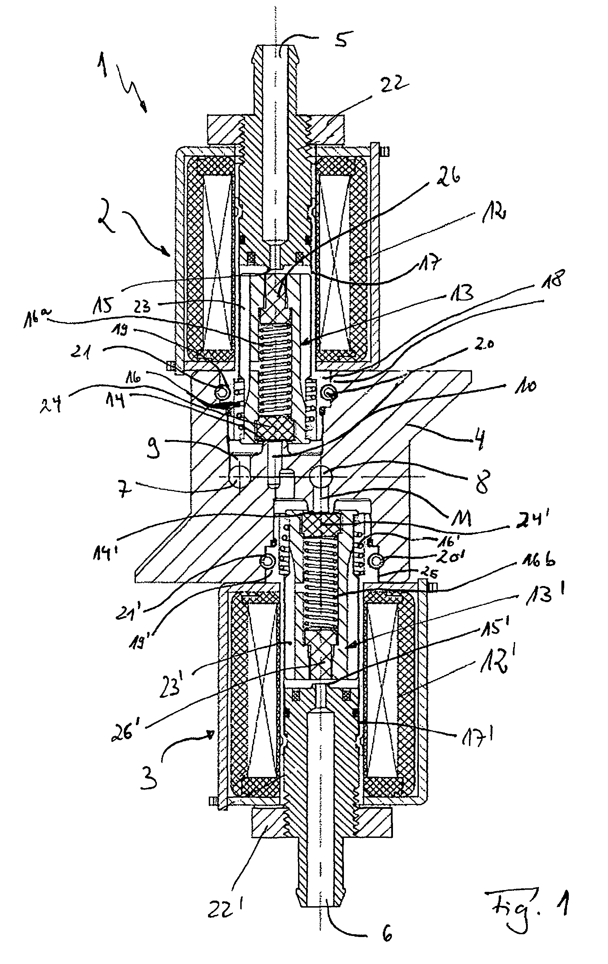

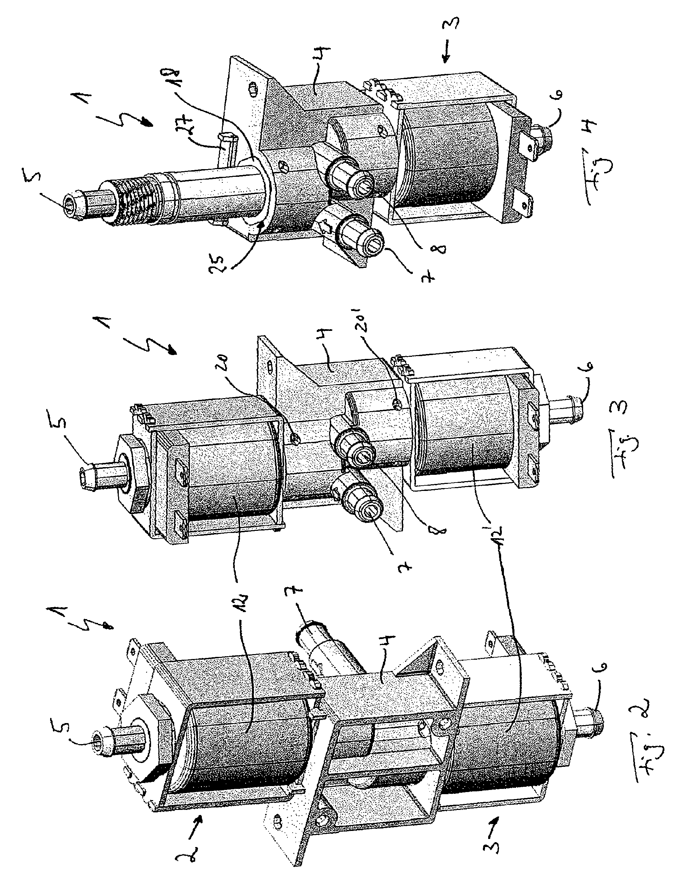

Entsprechend der Fig. 1, weist eine erfindungsgemäße Ventileinrichtung 1 zwei unabhängig voneinander schaltbare Magnetventile 2, 3, nämlich ein erstes Magnetventil 2 und ein zweites Magnetventil 3 auf, die über ein dazwischen angeordnetes Gehäuse 4 mit einer darin angeordneten Kanalstruktur miteinander verbunden sind. Das Gehäuse 4 ist dabei vorzugsweise aus Kunststoff, insbesondere als Kunststoffspritzgussteil ausgebildet. Im Bereich des ersten Magnetventils 2 weist die Ventileinrichtung 1 einen ersten Auslasskanal 5 auf, während sie im Bereich des zweiten Magnetventils 3 einen zweiten Auslasskanal 6 besitzt (vgl. auch die Fig. 2 bis 4). Im Bereich des Gehäuses 4 weist die Ventileinrichtung 1 einen Einlasskanal 7 sowie einen dritten Auslasskanal 8 auf. Erfindungsgemäß ist nun die Kanalstruktur im Gehäuse 4 derart ausgebildet, dass in Abhängigkeit eines Schaltzustandes der beiden Magnetventile 2, 3 der Einlasskanal 7 mit einem der Auslasskanäle 5, 6 oder 8 kommunizierend verbunden ist. Generell umfasst dabei die Kanalstruktur im Gehäuse 4 folgende Kanäle: Den Einlasskanal 7, den dritten Auslasskanal 8, einen von dem Einlasskanal 7 zum ersten Magnetventil 2 führenden ersten Kanal 9, einen vom ersten Magnetventil 2 zum zweiten Magnetventil 3 führenden zweiten Kanal 10 sowie einen vom zweiten Magnetventil 3 zum dritten Auslasskanal 8 führenden dritten Kanal 11.

Im Folgenden werden die beiden Magnetventile 2, 3 genauer beschrieben, wobei diese vorzugsweise als Gleichteile, das heißt, identisch, ausgebildet sind. In den beiden Magnetventilen 2, 3 ist jeweils ein Elektromagnet 12, 12' angeordnet, welcher den jeweiligen Auslasskanal 5, 6 vorzugsweise ringförmig umgibt. Ebenfalls ringförmig umgibt der jeweilige Elektromagnet 12, 12' einen Ventilkolben 13, 13' der gemäß der Fig. 1 im Wesentlichen vertikal hin- und her verstellbar ist. Betrachtet man den zweiten Kanal 10, so weist dieser jeweils endseitig einen Ventilsitz 14 bzw. 14' für den jeweils zugeordneten Ventilkolben 13, 13' bzw. ein dort angeordnetes Ventilelement 24, 24a des ersten Magnetventils 2 bzw. des zweiten Magnetventils 3 auf. Der Ventilkolben 13 des ersten Magnetventils 2 ist so zwischen dem Ventilsitz 14 am zweiten Kanal 10 und einem Ventilsitz 15 am ersten Auslasskanal 5 hin- und her verstellbar. Demgegenüber ist der Ventilkolben 13' des zweiten Magnetventils 3 zwischen dem Ventilsitz 14' und einem Ventilsitz 15' am zweiten Auslasskanal 6 hin- und her verstellbar. Mittels einer jeweiligen, vorzugsweise konisch verlaufenden Feder 16, 16' ist dabei der jeweilige Ventilkolben 13, 13' und damit ein jeweiliges Ventilelement 24, 24' gegen den zugehörigen Ventilsitz 14, 14' vorgespannt.

Geführt ist der jeweilige Ventilkolben 13, 13' in einer zugehörigen Führungshülse 17, 17', die im Bereich des Gehäuses 4 eine unrunde Außenkontur 18, 18', insbesondere einen Sechskant, aufweist und dadurch formschlüssig und drehfest in einer komplementär dazu ausgebildeten Ausnehmung 25, 25' am Gehäuse 4 eingreift. Auf diese Weise kann das jeweilige Magnetventil 2, 3 drehfest am Gehäuse 4 fixiert werden. Im Bereich der jeweiligen unrunden Außenkontur 18, 18' weist die Führungshülse 17, 17' eine nach außen offene Nut 19, 19' auf, die mit entsprechenden Öffnungen 20, 20' im Gehäuse 4 fluchtet, so dass durch einen durch die Öffnungen 20, 20' im Gehäuse 4 eingeführten und in die Nut 19, 19' an der jeweiligen Führungshülse 17, 17' eingreifenden Sicherungsstift 21, 21' eine axiale Fixierung des jeweiligen Magnetventils 2, 3 im Gehäuse 4 gegeben ist. Somit ist die Führungshülse 17, 17' nicht nur verdrehfest, sondern auch in Längsrichtung am Gehäuse 4 fixiert. Um den Elektromagneten 12, 12' ebenfalls fest mit dem Gehäuse 4 verbinden zu können, weist der jeweilige Auslasskanal 5, 6 des zugehörigen Magnetventils 2, 3 ein Außengewinde auf, auf welches eine entsprechende Mutter 22, 22' aufgedreht werden kann. Ein Anschlag 27 fixiert dabei den Elektromagneten 12 radial und garantiert dabei einen wirksamen Verdrehschutz.

Generell funktioniert die erfindungsgemäße Ventileinrichtung 1 wie folgt: Soll durch den ersten Auslasskanal 5 Flüssigkeit bzw. Dampf austreten, so befinden sich beide Magnetventile 2 und 3 in nicht aktiviertem Zustand und weisen demgemäß die gemäß der Fig. 1 dargestellte Stellung des jeweiligen Ventilkolbens 13, 13' auf. Wird nun über den Einlasskanal 7 Fluid bzw. Dampf in das Gehäuse 4 eingebracht, so strömt dieses/dieser über den ersten Kanal 9 und über einen am zugehörigen Ventilkolben 13 vorzugsweise beidseitig angeordneten, radialen Freischliff 23 hin zum Ventilsitz 15 und über diesen durch den ersten Auslasskanal 5 weiter. In der gemäß der Fig. 1 gezeigten Stellung liegt der Ventilkolben 13 mit seinem Ventilelement 24 auf dem Ventilsitz 14 auf, wodurch ein Fluideintritt in den zweiten Kanal 10 unterbunden ist.

Soll demgegenüber der Fluidstrom, beispielsweise Wasser oder Dampf, die Ventileinrichtung 1 über den zweiten Auslasskanal 6 verlassen, so muss das erste Magnetventil 2 bestromt werden, woraufhin sich bei diesem der Ventilkolben 13 nach oben bewegt und zwar soweit, bis er mit einem nicht näher bezeichneten Ventilelement dichtend auf dem Ventilsitz 15 aufsitzt. In diesem Fall strömt der Fluidstrom durch den Einlasskanal 7 im Gehäuse 4 über den ersten Kanal 9 und durch den zweiten Kanal 10 zum Ventilkolben 13' und über dessen beidseitig angeordneten Freischliff 23' hin zum zweiten Auslasskanal 6. Da der Ventilkolben 13' des zweiten Magnetventils 3 in unbestromten, das heißt in nicht aktiviertem Zustand des zweiten Magnetventils 3 mit seinem Ventilelement 24' dicht am Ventilsitz 14' anliegt, kann in diesem Zustand kein Fluidstrom über den dritten Kanal 11 hin zum dritten Auslasskanal 8 strömen.

Soll dagegen der Fluidstrom die Ventileinrichtung 1 ausschließlich über den dritten Auslasskanal 8 verlassen, so müssen beide Magnetventile 2 und 3 aktiviert werden, woraufhin beim ersten Magnetventil 2 sich der Ventilkolben 13 dichtend auf den Ventilsitz 15 legt und gleichzeitig den zweiten Kanal 10 öffnet, während sich beim zweiten Magnetventil 3 der Ventilkolben 13' dichtend auf den Ventilsitz 15' legt und den dritten Kanal 11 öffnet. In diesem Fall fließt der Fluidstrom durch den Einlasskanal 7 über den ersten Kanal 9 durch den zweiten Kanal 10 und den dritten Kanal 11 direkt zum dritten Auslasskanal 8. In nachfolgender Tabelle sind die einzelnen Schaltzustände nochmals aufgeführt:

| **erstes Magnetventil 2** | **zweites Magnetventil 3** | **Offener Auslasskanal** |
|---|---|---|
| nicht aktiv | nicht aktiv | erster Auslasskanal 5 |
| aktiv | nicht aktiv | zweiter Auslasskanal 6 |
| aktiv | aktiv | dritter Auslasskanal 8 |

Gemäß den Fig. 1 bis 4 sind dabei die beiden Magnetventile 2 und 3 gegenüberliegend zueinander angeordnet, wobei selbstverständlich klar ist, dass diese auch in anderer Ausrichtung zueinander positioniert sein können. Vorzugsweise sind jedoch beide Magnetventile 2, 3 identisch aufgebaut und dadurch als Gleichteile ausgebildet, wodurch die Lager- und Logistikkosten durch eine geringere Teilevielfalt reduziert werden können. Von besonderem Vorteil bei der erfindungsgemäßen Ventileinrichtung 1 ist, dass diese vergleichsweise kompakt und darüber hinaus eine montagefreundliche Anordnung des Einlasskanals 7 sowie der Auslasskanäle 5, 6 und 8 besitzt. Durch den Sicherungsstift 21 bzw. 21' und das Zusammenspiel der unrunden Außenkontur 18, 18' mit der komplementär dazu ausgebildeten Ausnehmung 25, 25' im Gehäuse 4 ist darüber hinaus eine denkbar einfache Montage und Demontage der Ventileinrichtung 1 realisierbar, was insbesondere die Wartung oder einen Austausch erleichtert.

Im Vergleich zu bisherigen 4/3-Wegeventile kann mit der erfindungsgemäßen Ventileinrichtung 1 eine konstruktiv und hinsichtlich eines Montageaufwands deutlich vereinfachte Ventileinrichtung geschaffen werden, da insbesondere bisher benötigte Verbindungsleitungen, Befestigungen, Verschraubungen, etc. entfallen können. Durch die Ausbildung des Gehäuses 4 aus Kunststoff, insbesondere als Kunststoffspritzgussteil, kann darüber hinaus ein Wärmeverlust reduziert werden und das Gehäuse 4 zudem vergleichsweise kostengünstig hergestellt werden. Bevorzugt wird die Ventileinrichtung 1 für Durchflussmengen von 400 ml/min und einem maximalen Arbeitsdruck von ca. 2,5 bar eingesetzt, beispielsweise in mit sogenannten "Pads" arbeitenden Kaffeemaschinen.

Die Ventilelemente 24 bzw. 24' sind in dem jeweiligen Ventilkolben 13 bzw. 13' formschlüssig fixiert. Wie insbesondere der Fig. 1 weiter zu entnehmen ist, ist innerhalb des jeweiligen Ventilkolbens 13, 13' eine weitere Feder 16a bzw. 16b vorgesehen, welche jeweils ein Dichtelement 26, 26' im Ventilkolben 13, 13' gegen das formschlüssig fixierte Ventilelement 24, 24' vorspannt. Bei Aktivierung der jeweiligen Elektromagnete 12, 12' werden die Ventilkolben 13, 13' in Richtung der Ventilsitze 14, 14' bis zum Anschlag bewegt, wobei die notwendigen Dichtungskräfte durch die federnd angeordneten Dichtelemente 26, 26' erzeugt werden.

## Patentansprüche

1. Ventileinrichtung (1), insbesondere ein 4/3-Wegeventil, mit zwei unabhängig voneinander schaltbaren Magnetventilen (2,3), die über ein dazwischen angeordnetes Gehäuse (4) mit einer darin angeordneten Kanalstruktur miteinander verbunden sind, wobei
- die Ventileinrichtung (1) im Bereich des ersten Magnetventils (2) einen ersten Auslasskanal (5), im Bereich des zweiten Magnetventils (3) einen zweiten Auslasskanal (6) und im Bereich des Gehäuses (4) einen Einlasskanal (7) sowie einen dritten Auslasskanal (8) aufweist,
- die Kanalstruktur im Gehäuse (4) derart ausgebildet ist, dass in Abhängigkeit eines Schaltzustandes der beiden Magnetventile (2,3) der Einlasskanal (7) mit einem der Auslasskanäle (5,6,8) kommunizierend verbunden ist,
- die Kanalstruktur im Gehäuse (4) folgende Kanäle aufweist,
- den Einlasskanal (7),
- den dritten Auslasskanal (8),
- einen von dem Einlasskanal (7) zum ersten Magnetventil (2) führenden ersten Kanal (9),
- einen vom ersten Magnetventil (2) zum zweiten Magnetventil (3) führenden zweiten Kanal (10),
- einen vom zweiten Magnetventil (3) zum dritten Auslasskanal (8) führenden dritten Kanal (11), und
- der zweite Kanal (10) jeweils endseitig einen Ventilsitz (14,14') für einen Ventilkolben (13,13') des erstens oder zweiten Magnetventils (2,3) bildet,
**dadurch gekennzeichnet,**
- **dass** jeder Ventilkolben (13,13') in einer zugehörigen Führungshülse (17,17') geführt ist,
- **dass** die Führungshülse (17,17') im Bereich des Gehäuses (4) eine unrunde Außenkontur (18,18') aufweist, die formschlüssig und drehfest in eine komplementär dazu ausgebildete Ausnehmung (25,25') am Gehäuse (4) eingreift.

2. Ventileinrichtung nach Anspruch 1,
**dadurch gekennzeichnet,**
**dass** die beiden Magnetventile (2,3) gegenüberliegend angeordnet sind.

3. Ventileinrichtung nach Anspruch 1 oder 2 ,
**dadurch gekennzeichnet,**
- **dass** der Ventilkolben (13) des ersten Magnetventils (2) zwischen dem Ventilsitz (14) am zweiten Kanal (10) und einem Ventilsitz (15) am ersten Auslasskanal (5) hin- und herverstellbar ist, und/oder
- **dass** der Ventilkolben (13') des zweiten Magnetventils (3) zwischen dem Ventilsitz (14') am zweiten Kanal (10) und einem Ventilsitz (15') am zweiten Auslasskanal (6) hin- und herverstellbar ist.

4. Ventileinrichtung nach einem der Ansprüche 1 bis 3,
**dadurch gekennzeichnet,**
**dass** der jeweilige Ventilkolben (13,13') des ersten und des zweiten Magnetventils (2,3) gegen den jeweils zugeordneten Ventilsitz (14,14') am zweiten Kanal (10) vorgespannt ist.

5. Ventileinrichtung nach einem der Ansprüche 1 bis 4,
**dadurch gekennzeichnet,**
**dass** die Führungshülse (17,17') im Bereich der unrunden Außenkontur (18,18') eine nach außen offene Nut (19,19') aufweist, die mit entsprechenden Öffnungen (20,20') im Gehäuse (4) fluchtet, so dass durch einen durch die Öffnungen (20,20') im Gehäuse (4) eingeführten und in die Nut (19,19') an der Führungshülse (17,17') eingreifenden Sicherungsstift (21,21') eine Fixierung des jeweiligen Magnetventils (2,3) im Gehäuse (4) gegeben ist.

6. Ventileinrichtung nach einem der Ansprüche 1 bis 5,
**dadurch gekennzeichnet,**
**dass** die beiden Magnetventile (2,3) identisch aufgebaut sind.

7. Ventileinrichtung nach einem der Ansprüche 1 bis 6,
**dadurch gekennzeichnet,**
**dass** das Gehäuse (4) aus Kunststoff, insbesondere als Kunststoffspritzgussteil, ausgebildet ist.

8. Ventileinrichtung nach einem der Ansprüche 1 bis 7,
**dadurch gekennzeichnet,**
**dass** der Ventilkolben (13,13') zumindest einen Freischliff (23,23') aufweist.

## Claims

1. A valve arrangement (1), in particular a 4/3 way valve, with two independently switchable solenoid valves (2, 3), which are interconnected by way of a housing (4) arranged in between them that incorporates a channel structure, wherein
- the valve arrangement (1) has a first outlet channel (5) in the area of the first solenoid valve (2), a second outlet channel (6) in the area of the second solenoid valve (3), and an inlet channel (7) as well as a third outlet channel (8) in the area of the housing (4),
- the channel structure in the housing (4) is configured in such a way that the inlet channel (7) is communicatively connected with one of the outlet channels (5, 6, 8) as a function of a switching state of the two solenoid valves (2, 3),
- the channel structure in the housing (4) exhibits the following channels;
- the inlet channel (7),
- the third outlet channel (8),
- a first channel (9) leading from the inlet channel (7) to the first solenoid valve (2),
- a second channel (10) leading from the first solenoid valve (2) to the second solenoid valve (3),
- a third channel (11) leading from the second solenoid valve (3) to the third outlet channel (8), and
- the respective end of the second channel (10) forms a valve seat (14, 14') for a plunger (13, 13') of the first or second solenoid valve (2, 3),
**characterized in that**
- each plunger (13, 13') is guided into an accompanying guide sleeve (17, 17'),
- the guide sleeve (17, 17') exhibits an uneven outer contour (18, 18') in the area of the housing (4), said outer contour engages into a recess (25, 25') on the housing (4) designed complementary thereto in a positive-fitting and torque-roof manner.

2. The valve arrangement according to claim 1,
**characterized in that**
the two solenoid valves (2, 3) are arranged opposite each other.

3. The valve arrangement according to claim 1 or 2,
**characterized in that**
- the plunger (13) of the first solenoid valve (2) can be adjusted back and forth between the valve seat (14) on the second channel (10) and a valve seat (15) on the first outlet channel (5), and/or
- the plunger (13') of the second solenoid valve (3) can be adjusted back and forth between the valve seat (14') on the second channel (10) and a valve seat (15') on the second outlet channel (6).

4. The valve arrangement according to one of claims 1 to 3,
**characterized in that**
the respective plunger (13, 13') of the first and second solenoid valve (2, 3) is pretensioned against the respectively allocated valve seat (14, 14') on the second channel (10).

5. The valve arrangement according to one of claims 1 to 4,
**characterized in that**
the guide sleeve (17, 17') exhibits an outwardly open groove (19, 19') in the area of the uneven outer contour (18, 18'), which aligns with corresponding openings (20, 20') in the housing (4), so that a locking pin (21, 21') introduced through the openings (20, 20') in the housing (4) and engaging into the groove (19, 19') on the guide sleeve (17, 17') ensures that the respective solenoid valve (2, 3) is fixedly secured in the housing (4).

6. The valve arrangement according to one of claims 1 to 5,
**characterized in that**
the two solenoid valves (2, 3) have an identical structural design.

7. The valve arrangement according to one of claims 1 to 6,
**characterized in that**
the housing (4) is made out of plastic, in particular as an injection molded plastic part.

8. The valve arrangement according to one of claims 1 to 7,
**characterized in that**
the plunger (13, 13') exhibits at least one clearance (23, 23').

## Revendications

1. Dispositif de soupape (1), en particulier une soupape à 4/3 voies, comprenant deux soupapes magnétiques (2, 3) pouvant être commutées indépendamment l'une de l'autre, lesquelles sont reliées l'une à l'autre par un boîtier (4) intercalé avec une structure de canal disposée à l'intérieur,
- le dispositif de soupape (1) présentant un premier canal de sortie (5) dans la zone de la première soupape magnétique (2), un second canal de sortie (6) dans la zone de la seconde soupape magnétique (3) et un canal d'entrée (7) ainsi qu'un troisième canal de sortie (8) dans la zone du boîtier (4),
- la structure de canal dans le boîtier (4) étant conçue de telle sorte que, en fonction d' un état de commutation des deux soupapes magnétiques (2, 3), le canal d'entrée (7) est reliée de façon communicante avec l'un des canaux de sortie (5, 6, 8),
- la structure de canal dans le boîtier (4) présente les canaux suivants,
- le canal d'entrée (7),
- le troisième canal de sortie (8),
- un premier canal (9) allant du canal d'entrée (7) à la première soupape magnétique (2),
- un second canal (10) allant de la première soupape magnétique (2) à la seconde soupape magnétique (3),
- un troisième canal (11) allant de la seconde soupape magnétique (3) au troisième canal de sortie (8), et
- le second canal (10) formant à chaque fois côté extrémité un siège de soupape (14, 14') pour un piston à soupape (13, 13') du premier ou second siège de soupape (2, 3),
**caractérisé**
- **en ce que** chaque piston à soupape (13, 13') est guidé dans une douille de guidage (17, 17') spécifique,
- **en ce que** la douille de guidage (17, 17') présente dans la zone du boîtier (4) un contour extérieur (18, 18') ovale qui s'engage par complémentarité de formes et de façon solidaire en rotation dans un évidement (25, 25') conçu de façon complémentaire sur le boîtier (4).

2. Dispositif de soupape selon la revendication 1,
**caractérisé en ce que**
les deux soupapes magnétiques (2, 3) sont disposées l'une en face de l'autre.

3. Dispositif de soupape selon la revendication 1 ou 2,
**caractérisé**
- **en ce que** le piston à soupape (13) de la première soupape magnétique (2) peut coulisser d'un côté et de l'autre entre le siège de soupape (14) sur le second canal (10) et un siège de soupape (15) sur le premier canal de sortie (5), et/ou
- **en ce que** le piston à soupape (13') de la seconde soupape magnétique (3) peut coulisser d'un côté et de l'autre entre le siège de soupape (14') sur le second canal (10) et un siège de soupape (15') sur le second canal de sortie (6).

4. Dispositif de soupape selon l'une des revendications 1 à 3,
**caractérisé en ce que**
le piston à soupape (13, 13') respectif de la première et de la seconde soupape magnétique (2, 3) est précontraint par rapport au siège de soupape (14, 14') respectivement associé sur le second canal (10).

5. Dispositif de soupape selon l'une des revendications 1 à 4,
**caractérisé en ce que**
la douille de guidage (17, 17') présente dans la zone du contour extérieur (18, 18') ovale une rainure (19, 19') ouverte vers l'extérieur, laquelle est alignée avec des ouvertures (20, 20') correspondantes dans le boîtier (4), de sorte qu'une fixation de la soupape magnétique (2, 3) respective dans le boîtier (4) est assurée par une broche de sécurité (21, 21') introduite par les ouvertures (20, 20') dans le boîtier (4) et dans la rainure (19, 19') sur la douille de guidage (17, 17').

6. Dispositif de soupape selon l'une quelconque des revendications 1 à 5,
**caractérisé en ce que**
les deux soupapes magnétiques (2, 3) sont structurées de façon identique.

7. Dispositif de soupape selon l'une quelconque des revendications 1 à 6,
**caractérisé en ce que**
le boîtier (4) est conçu en plastique, en particulier sous la forme d'une pièce moulée par injection en plastique.

8. Dispositif de soupape selon l'une quelconque des revendications 1 à 7,
**caractérisé en ce que**
le piston à soupape (13, 13') présente au moins une surface polie libre (23, 23').
